# EUROPÄISCHE PATENTSCHRIFT

(11) **EP 1 126 660 B1**
(45) Veröffentlichungstag und Bekanntmachung des Hinweises auf die Patenterteilung: **01.12.2004**
(21) Anmeldenummer: 00103074.1
(22) Anmeldetag: 15.02.2000
(51) Int. Cl.: H04L 12/28, H04L 12/66, H04L 29/06, H04L 29/08

(54) **Verfahren zur Uebermittlung einer Nachricht sowie Gateway**
Method for transmitting a message, and a gateway
Procédé pour transmettre un message, et passerelle

(43) Veröffentlichungstag der Anmeldung: 22.08.2001
(73) Patentinhaber: SIEMENS AKTIENGESELLSCHAFT, 80333 München (DE)
(72) Erfinder: Offer, Gero, Dipl.-Ing., 70186 Stuttgart (DE); Hausmann, Rüdiger, Dipl.-Ing., 82377 Penzberg (DE)

(56) Entgegenhaltungen:
- EP-A- 0 859 500
- WO-A-99/33226
- WO-A-99/35811
- US-A- 5 627 997
- US-A- 5 835 726
- US-A- 5 873 077
- US-A- 5 917 537
- US-A- 5 995 943

## Beschreibung

Die Erfindung betrifft ein Verfahren zur Übermittlung einer Nachricht in einem Datenkommunikationsnetz oder aus einem solchen in ein Telekommunikationsnetz nach dem Oberbegriff des Anspruchs 1 sowie ein entsprechendes Gateway.

Die Verknüpfung von Daten- und Telekommunikationsnetzen schreitet immer weiter voran- siehe z.B. WO-A-99 35811 . Zum einen sind die Hersteller von Mobilfunkgeräten und -systemen sowie die Betreiber von Mobilfunknetzen stark daran interessiert, den Nutzern der Mobilfunktechnik einen möglichst einfachen und nutzbringenden Zugang zu Datenkommunikationsnetzen - insbesondere dem Internet - zu bieten, und zum anderen sind die Betreiber von Diensten im Internet daran interessiert, neben den Nutzern von Datenendgeräten auch die vielen Nutzer von Kommunikationsendgeräten mit ihrem Angebot unmittelbar anzusprechen.

Im Zuge dieser Verknüpfung etablieren sich zunehmend sogenannte "Media-Gateways", die erforderliche Anpassungen von Nachrichten- bzw. Dateiformaten für die jeweiligen Endgeräte bzw. in Anpassung an den konkreten Empfänger - insbesondere die Konvertierung von HTML-Dateien in das WML-Format oder umgekehrt - ausführen. Bekanntlich sind derzeitige Mobilfunk-Engeräte zur Verarbeitung des HTML-Formates nicht in der Lage, sondern arbeiten im Rahmen des WAP (Wireless Application Protocol) mit der Sprache WML (Wireless Markup Language).

In derartigen Gateways sind fest vorgegebene Konvertierungsregeln implementiert, mit denen der Nachrichteninhalt der entsprechenden Dateien in ein endgeräteseitig brauchbares bzw. optimiertes Format gebracht wird, um einen Empfang und eine Auswertung der Nachricht an dem Endgerät überhaupt zu ermöglichen oder die Übertragungszeit zu verkürzen.

Die Funktionalität dieser Media-Gateways ist allerdings noch auf die ursprünglich implementierte Konvertierungsfunktion beschränkt.

Der Erfindung liegt die Aufgabe zugrunde, ein verbessertes Verfahren zur Übermittlung einer Nachricht in einem Datenkommunikationsnetz bzw. aus einem solchen in ein Telekommunikationsnetz mit einer wesentlich erweiterten bzw. erweiterbaren Funktionalität sowie ein entsprechendes Gateway anzugeben.

Diese Aufgabe wird hinsichtlich ihres Verfahrensaspektes durch ein Verfahren mit den Merkmalen des Anspruchs 1 und hinsichtlich ihres Vorrichtungsaspektes durch ein Gateway mit den Merkmalen des Anspruchs 12 gelöst.

Die Erfindung schließt den grundlegenden Gedanken ein, durch den Zugriff auf eine geeignet zugeordnete und aufgebaute Datenbasis die Möglichkeit zu einer flexiblen Verarbeitung von zu übermittelnden Nachrichten beim Gateway zu schaffen. Weiter schließt die Erfindung den Gedanken ein, hierzu vor einer Nachrichtenübermittlung - beispielsweise beim Aufbau einer Session - eine Auswahlroutine abzuarbeiten, in deren Verlauf unter differenziertem Zugriff auf diese Regeldatenbasis ein für die jeweilige Konstellation gültiger Satz von Konvertierungs-/Verarbeitungsregeln gewonnen wird. Letztlich schließt die Erfindung den Gedanken ein, diesen Regelsatz bzw. ein daraus abgeleitetes Steuersignal für die Verarbeitung der Nachricht beim Gateway zwischenzuspeichern.

Die Verarbeitung der Nachricht ist insbesondere eine - als solche bekannte, im Rahmen der Erfindung aber spezifisch auswählbare - Konvertierung des Formates, beispielsweise für eine Nachrichtenübertragung aus dem Internet in ein Mobilfunknetz eine Konvertierung aus dem HTML-Format in das WML-Format. Eine weitere ansteuerbare Konvertierung umfaßt die Übersetzung in eine andere Sprache. Eine solche Sprach-Konvertierung ist insbesondere im Ergebnis einer logischen Verarbeitung einer Ursprungs-IP-Adresse und des Einwählpunktes anzusteuern, wenn in deren Ergebnis der einwählende Nutzer als Ausländer erkannt und seine (vermutliche) Muttersprache zuordenbar wird. Eine weitere, für eine Reihe von Anwendungsfällen nützliche Konvertierung ist die Umwandlung einer adressierten IP-Adresse, z. B. im Rahmen einer Weiterleitung, bei einem Server-Umzug oder im Zusammenhang mit der Inanspruchnahme eines Web Call & Session Center.

Eine weitere wesentliche Möglichkeit der Verarbeitung der zu übermittelnden Nachricht ist deren Ergänzung um Zusatzinformationen. Hierbei handelt es sich insbesondere um Werbeinformationen, die insbesondere in eine nutzerprofilbezogen erstellte Portal Site eingebunden sind oder als Werbebanner eingeblendet werden. Weitere nützliche Zusatzinformationen, die im Rahmen der Verarbeitung der Nachricht beigefügt werden können, sind Tarifinformationen und Handhabungs-Informationen, beispielsweise Info-Push-Informationen.

Schließlich ist im Rahmen der Verarbeitung auch eine Ausblendung bestimmter Nachrichtenteile (beispielsweise von Werbekomponenten), bis hin zur "Ausblendung" bzw. Sperrung der Übermittlung ganzer Seite (beispielsweise von Seiten mit pornografischem oder gewaltverherrlichendem Inhalt), in Abhängigkeit vom Nutzerprofil möglich.

Die Auswahlfunktion umfaßt zweckmäßigerweise die Ausführung eines logischen Verarbeitungsvorganges eines Datensatzes aus persönlichen Daten des Nutzers (beispielsweise Alter, Familienstand, Interessengebiete, Daten zum Konsumverhalten etc.) und/oder die Daten- oder Telekommunikationsnetzadresse des Endgerätes und/oder die Identifikation eines Einwahlpunktes oder des geografischen Ortes des Endgerätes und/oder die Datennetzadresse der Nachrichtenquelle und/oder Zeitdaten (Kalender bzw. Uhrzeit) und/oder die Identifikation des zur Übermittlung der Nachricht vorgesehenen Trägermediums bzw. Übermittlungsweges und/oder sonstige Auswahlkriterien, insbesondere vorgegeben durch den Betreiber des Gateway.

Während die oben erwähnten Konvertierungs- und Verarbeitungsregeln zweckmäßigerweise in einem ersten Speicher bzw. Speicherbereich beim Gateway gespeichert sind, sind in einem zweiten Speicher bzw. Speicherbereich vorteilhafterweise vorbestimmte Auswahldatensätze gespeichert, die entsprechend praktischen Erfahrungen bei der Nutzung des Datennetzes oder nach Vorgaben von Providern oder Diensteerbringern oder Nutzergruppen strukturiert sind. Ein solcher Auswahldatensatz wird zweckmäßigerweise bei einem Verbindungsaufbau in Abhängigkeit von einer Startbedingung (die üblicherweise zu den Auswahldaten zählen wird) adressiert.

Die oben erwähnten Zusatzinformationen werden aus einem oder mehreren Zusatzinformationsspeicher(n) abgerufen, mit dem bzw. denen das Gateway mindestens zum Zeitpunkt der Verarbeitung der Nachricht entsprechend dem gültigen Konvertierungsund Verarbeitungsregelsatz verbunden ist.

Der Aufbau des Media-Gateways, d. h. des mit den Konvertierungs- und Verarbeitungsaufgaben betrauten Servers bzw. Rechnerverbundes, ergibt sich im wesentlichen aus den oben angesprochenen Verfahrens- bzw. Funktionsaspekten. Neben den erwähnten Speichereinrichtungen weist das Gateway insbesondere mehrere Verbindungsmittel, die einerseits zur Herstellung einer Verbindung mit der Regeldatenbasis und andererseits zur Verbindung mit dem Zusatzinformationsspeicher dienen, sowie Steuermittel zum Start und zur Abarbeitung der Auswahlroutine sowie Umsetzermittel zur Bildung eines Konvertierungs-Steuersignals aus dem ausgewählten Konvertierungs- und Verarbeitungsregelsatz auf.

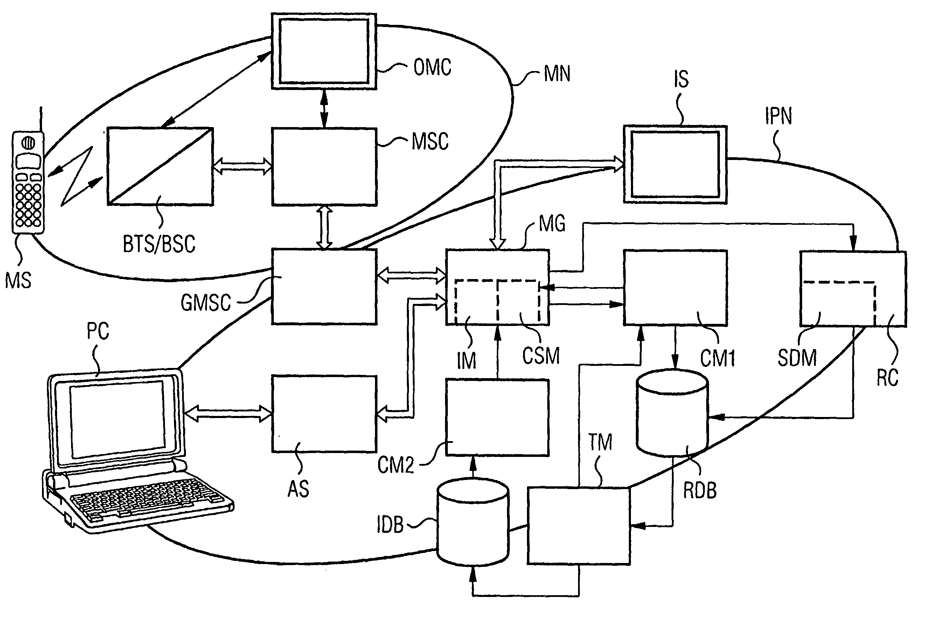

Vorteile und Zweckmäßigkeiten der Erfindung ergeben sich im übrigen aus den Unteransprüchen sowie der nachfolgenden Beschreibung bevorzugter Ausführungsbeispiele anhand der Figur.

Die Figur zeigt in einer schematischen Darstellung in Form eines Funktions-Blockschaltbildes ein Ausführungsbeispiel einer Anordnung zur Durchführung des erfindungsgemäßen Verfahrens in einem mit einem Mobilfunknetz MN verknüpften IP-Netz IPN.

Der vorausgesetzte Aufbau des Mobilfunknetzes ist an sich bekannt und bedarf daher hier keiner genaueren Erläuterung. Eine Mobilstation MS steht in Funkverbindung mit einer Basisstation BTS/BSC, die einen Funkbereich einer Zelle des Mobilfunknetzes aufspannt. Eine Mobilvermittlungsstelle MSC bildet einen Vermittlungsknoten des Mobilfunknetzes, dem die Basisstation BTS/BSC zugeordnet ist und der seinerseits mit einer Gateway-Mobilvermittlungsstelle GMSC zur Herstellung einer Verknüpfung mit dem IP-Netz IPN in Verbindung steht. (In paketorientierten Mobilfunknetzen (GPRS, UMTS) wird diese Verknüpfung durch einen Gateway Service Node (GSN) hergestellt.) Ein Betriebs- und Wartungszentrum OMC steuert und überwacht den laufenden Netzbetrieb des Mobilfunknetzes und verwaltet Teilnehmer, Endgeräte, Abrechnungen etc., dient der Netzkonfiguration und dem Performance-Management und schließlich dem Sicherheitsmanagement und der Wartung. Der Aufbau des Mobilfunknetzes MN ist insoweit unvollständig dargestellt, als die üblicherweise zugehörigen Datenbanken, etwa zur Teilnehmeridentifizierung und - authentifizierung sowie zur Geräteregistrierung, nicht dargestellt sind.

Noch stärker vereinfacht ist der Aufbau des IP-Netzes IPN skizziert, von dem - neben der bereits erwähnten Gateway-Mobilvermittlungsstelle GMSC - lediglich ein Zugriffs-Server AS, über den ein Laptop PC Zugriff zum Netz hat, sowie ein Informations-Server IS gezeigt sind, über den ein bestimmter Nachrichtenvorrat verwaltet und zur Übertragung bereitgestellt wird. Weiterhin ist ein Media-Gateway MG gezeigt, welches zwischen den Informations-Server IS einerseits und die Gateway-Mobilvermittlungsstelle GMSC sowie den Zugriffs-Server AS andererseits geschaltet ist.

Das Media-Gateway MG ist über eine erste Verbindungseinrichtung CM1 datenmäßig sowie über eine Routine-Ablaufsteuerung RC steuerungsmäßig mit einer Regeldatenbasis RDB verbunden. Die Routine-Ablaufsteuerung weist einen Auswahldatenspeicher SDM auf. Die Regeldatenbasis RDB ist ihrerseits mit dem Eingang einer Umsetzereinrichtung TM verbunden, welche ausgangsseitig über die erste Verbindungseinrichtung CM1 mit dem Media-Gateway verbunden ist, und zwar dort mit einem internen Steuerdaten-Zwischenspeicher CSM. Weiterhin ist die Umsetzereinrichtung TM ausgangsseitig mit einer Zusatzinformations-Datenbasis IDB verbunden, welche ihrerseits über eine zweite Verbindungseinrichtung CM2 mit dem Media-Gateway verbunden ist, und zwar dort mit einem Zusatzinformations-Zwischenspeicher IM.

Nachfolgend wird an zwei konkreten Beispielen die Funktionsweise dieser Anordnung erläutert.

Zunächst wird angenommen, ein Nutzer des Mobilfunknetzes MN frage mit seiner Mobilstation MS, bei der es sich um ein WAP(Wireless Application Protocol)-fähiges Mobiltelefon handelt, während einer Auslands-Dienstreise bei einem Online-Broker (der im Inland Börsengeschäfte für den Nutzer erledigt) den aktuellen Börsenkurs bestimmter Aktien ab. Der Online-Broker hält auf dem Informations-Server IS die aktuellsten Börsenkurse ("Intraday"-Kurse) wichtiger Aktien für die Kunden zugriffbar. Als besonderen Service bietet der Online-Broker eine Zeitumrechnung zwischen der Zeit der Handelsplätze und der Ortszeit des Aufenthaltsortes eines Nutzers an, der Kurse abfragt. Eine entsprechende Konvertierung erfolgt auf dem Media-Gateway MG auf der Grundlage eines über die Gateway-Mobilvermittlungsstelle GMSC aus dem Mobilfunknetz MN erhaltenen Signals, das den aktuellen Aufenthaltsort des Nutzers der Mobilstation MS präsentiert. Ein solches Signal liegt in dem zellular aufgebauten Mobilfunknetz im Zusammenhang mit der aktuellen Zuordnung einer Basisstation BTS/BSC zur Mobilstation MS ohnehin vor, und über das Betriebs- und Wartungszentrum OMC ist die Übergabe dieser Information über die Gateway-Mobilvermittlungsstelle an das Media-Gateway im IP-Netz IPN durchführbar. Weiterhin wird mit der Anfrage des Nutzers natürlich dessen Identifikationscode an das Media-Gateway MG (und natürlich auch weiter an den Informations-Server IS) übertragen.

Bei Aufbau der Verbindung zwischen der Mobilstation MS und dem Informations-Server IS des Online-Brokers wird zugleich eine Verbindung zwischen dem Media-Gateway MG und der Regeldatenbasis RDB hergestellt und die Routine-Ablaufsteuerung RC zur Ausführung einer Verarbeitungsregel-Abfrage aktiviert. In deren Rahmen wird anhand des Identifikationscodes des Nutzers zum einen ein Nutzerprofil aufgerufen, das beispielsweise die Wertpapierkennnummern derjenigen Aktien enthalten kann, die der Nutzer in seinem Depot hält. Weiterhin gehen in die Abarbeitung der Routine eine Kennzeichnung des für die Anfrage benutzten Endgerätes als Mobiltelefon sowie das den Aufenthaltsort kennzeichnende Signal ein.

In der Regeldatenbasis RDB wird daraufhin aus der Vielzahl gespeicherter Konvertierungs- und Verarbeitungsregeln ein für die aktuelle Anfrage anzuwendender Konvertierungs- und Verarbeitungsregelsatz formiert. Dieser beschreibt insbesondere eine Filterung des durch den Online-Broker bereitgestellten Kurs-Tableaus mit den Aktien-Auswahldaten (WPKN der vom Nutzer gehaltenen Aktien), eine Übermittlung der Nachricht in der für das Mobiltelefon "lesbaren" Sprache WML und eine Zeitumrechnung auf die Ortszeit des Aufenthaltsortes des Nutzers.

Dieser Konvertierungs- und Verarbeitungsregelsatz wird in der Umsetzereinrichtung TM in eine entsprechende Steuersignalfolge umgesetzt, die an das Media-Gateway MG übermittelt und dort im Steuerdaten-Zwischenspeicher CSM zwischengespeichert wird. Optional kann die von der Umsetzereinrichtung TM ausgegebene Steuersignalfolge zur Adressierung der Zusatzinformations-Datenbasis IDB genutzt werden. Aus dieser können beispielsweise aufgrund des den Aufenthaltsort des Nutzers kennzeichnenden Teils der Steuersignalfolge lokale Werbeinformationen über die zweite Verbindungseinrichtung CM2 in den Zusatzinformations-Zwischenspeicher IM des Media-Gateway eingelesen werden.

Nachdem beim Informations-Server des Online-Brokers die Anfrage des Nutzers registriert und dessen Zugangsberechtigung sowie der Gegenstand der Anfrage geprüft wurde, wird die das Kurstableau umfassende Internetseite freigegeben und im Media-Gateway der oben skizzierten Konvertierung und Verarbeitung aufgrund der im Steuerdaten-Zwischenspeicher CSM und im Zusatzinformations-Zwischenspeicher IM gespeicherten Daten unterzogen und schließlich als WML-Nachricht, die die auf Ortszeit bezogenen aktuellen Kurse der vom Nutzer gehaltenen Aktien und lokale Werbeinformationen umfaßt, an die Mobilstation MS übermittelt und dort auf dem Display angezeigt.

Ein zweites Beispiel geht von der Annahme aus, daß ein an Wertpapieranlagen interessierter Internet-Nutzer über seinen Laptop PC das Informationsangebot des Online-Brokers in Anspruch nehmen will, ohne bei diesem bereits als Kunde registriert zu sein. Er wählt die Netzadresse des Brokers, woraufhin über den Zugriffs-Server AS eine Verbindung zu dessen Informations-Server IS hergestellt wird. Auch hier ist das Media-Gateway in die Verbindung eingeschleift und erhält zumindest eine Information hinsichtlich des Einwahlknotens des Nutzers. Eine weitere relevante Information ist aus dem Umstand ableitbar, daß der Nutzer beim Verbindungsaufbau keine Eingabe einer Kundennummer oder eines Identifikationscodes vornimmt.

Die beim Verbindungsaufbau mit Aktivierung der Routine-Ablaufsteuerung RC gestartete Auswahlroutine beruht also auf einem wenig umfangreichen Auswahldatensatz, gestattet aber gleichwohl die sinnvolle Bestimmung eines relevanten Konvertierungs- und Verarbeitungsregelsatzes aus der in der Regeldatenbasis gespeicherten Menge von Konvertierungs- und Verarbeitungsregeln. Der hier gültige Regelsatz beschreibt insbesondere die Bereitstellung einer Sach- und Werbeinformationen in ansprechender Aufbereitung enthaltenden Portal Site sowie die Einblendung von Werbebannern lokaler Diensteanbieter aus dem geografischen Bereich des Einwahlknotens des Nutzers.

Wie im vorigen Beispiel wird eine den gültigen Regeldatensatz reflektierende Steuersignalfolge im Steuerdaten-Zwischenspeicher CSM des Media-Gateway MG zwischengespeichert, und mittels der Steuersignalfolge wird die Zusatzinformations-Datenbasis IDB adressiert, und die ausgelesenen Zusatzinformationen (Portal Site und Werbebanner) werden in den Zusatzinformations-Zwischenspeicher IM übernommen. Die aus dem Informations-Server IS bereitgestellte Nachricht im internetüblichen HTML-Format muß in diesem Fall - anders als im Falle eines Mobilfunk-Endgerätes - keiner Konvertierung des Formates unterzogen werden. Falls aus der Kennung des Einwahlknotens erkennbar wird, daß der Nutzer aus dem Ausland stammt, ist allerdings ggf. eine Sprach-Konvertierung auszuführen, falls diese Leistung beim Media-Gateway implementiert ist. Ansonsten wird die Nachricht nach Präsentation der Portal Site und unter Einblendung der als Zusatzinformationen ausgewählten Werbebanner auf dem Laptop PC des Nutzers dargeboten.

Die Ausführung der Erfindung ist nicht auf die beschriebenen Beispiele beschränkt, sondern ebenso in einer Vielzahl von Abwandlungen möglich, die im Rahmen fachgemäßen Handelns liegen.

Insbesondere ist unter der Ergänzung der eigentlichen Nachricht um Zusatzinformationen (neben Portal Sites, Werbebanner o. ä.) auch eine Übertragung von Videobildfolgen, speziell auch von Live-Aufnahmen, zu verstehen. Auch das Öffnen von sogenannten Chatfenstern zur Online-Kommunikation mit anderen Nutzern im Rahmen der Übertragung einer Nachricht soll als im Rahmen der Erfindung liegend angesehen werden.

## Patentansprüche

1. Verfahren zur Übermittlung einer Nachricht an ein Endgerät in einem Datenkommunikationsnetz (IPN), insbesondere IP-Netz, oder aus dem Datenkommunikationsnetz (IPN) in ein Telekommunikationsnetz (MN), insbesondere Mobilfunknetz, unter Konvertierung des Nachrichtenformates entsprechend mindestens einer vorgegebenen Konvertierungsregel in einem Gateway (MG),
**dadurch gekennzeichnet, daß**
vor Beginn der Übermittlung eine Verbindung zwischen dem Gateway (MG) und einer Regeldatenbasis (RDB) hergestellt, eine Auswahlroutine (RC) zur Festlegung eines gültigen Konvertierungs- und Verarbeitungsregelsatzes aus einer in der Regeldatenbasis (RDB) gespeicherten Menge von Konvertierungsund Verarbeitungsregeln zur Konvertierung des Nachrichtenformates und wahlweise zur Ergänzung um Zusatzinformationen und/oder Reduktion um vorbestimmte Teile gestartet und
aus dem Konvertierungs- und Verarbeitungsregelsatz ein Konvertierungs-Steuersignal gebildet wird,
wobei der Konvertierungs- und Verarbeitungsregelsatz oder das Steuersignal beim Gateway (MG) zwischengespeichert wird.

2. Verfahren nach Anspruch 1,
**dadurch gekennzeichnet, daß**
die Herstellung der Verbindung zur Regeldatenbasis (RDB) und der Start der Auswahlroutine (RC) bei Aufbau einer Session im Datenkommunikationsnetz (IPN) erfolgen.

3. Verfahren nach Anspruch 1 oder 2,
**dadurch gekennzeichnet, daß**
in der Regeldatenbasis (RDB) Mengen von geordneten Konvertierungs- und Verarbeitungsregeln zur verketteten Ausführung von Konvertierungs- und Verarbeitungsschritten gespeichert sind.

4. Verfahren nach einem der vorangehenden Ansprüche,
**dadurch gekennzeichnet, daß**
die Auswahlroutine (RC) anhand eines Auswahldatensatzes (SDM) abgearbeitet wird, der umfaßt:
- Benutzerdaten und/oder
- die Datenkommunikationsnetz- oder Telekommunikationsnetz-Adresse des Endgerätes und/oder
- die Identifikation eines Einwahlpunktes oder des geografischen Einwahlortes in das Datenkommunikationsnetz (IPN) oder des Ortes eines Endgerätes des Telekommunikationsnetzes (MN) und/oder
- die Datenkommunikationsnetz-Adresse der Nachrichtenquelle und/oder
- Echtzeitdaten und/oder
- die Identifikation eines von mehreren zulässigen Trägermedien bzw. Übertragungswegen zum Endgerät und/oder
- sonstige Auswahlkriterien, insbesondere vorgegeben durch den Betreiber des Gateway.

5. Verfahren nach Anspruch 4,
**dadurch gekennzeichnet, daß**
die Abarbeitung der Auswahlroutine (RC) den Aufruf eines individuellen Nutzerprofils mindestens anhand von Benutzerdaten und/oder der Datenkommunikationsnetz- oder Telekommunikationsnetz-Adresse des Endgerätes umfaßt.

6. Verfahren nach einem der vorangehenden Ansprüche,
**dadurch gekennzeichnet, daß**
die Konvertierung eine Übersetzung in eine andere Sprache umfaßt oder eine Ergänzung um eine Zusatzinformation in einer anderen Sprache erfolgt.

7. Verfahren nach einem der vorangehenden Ansprüche,
**dadurch gekennzeichnet, daß**
die Konvertierung die Umwandlung einer adressierten IP-Adresse, insbesondere in Abhängigkeit von einer am Endgerät oder einem in die Übermittlung involvierten Server (AS) im Datenkommunikationsnetz (IPN) eingestellten Weiterleitungs-Bedingung, umfaßt.

8. Verfahren nach einem der vorangehenden Ansprüche,
**dadurch gekennzeichnet, daß**
die Konvertierung eine Umwandlung der Nachricht oder eines Teils derselben aus dem HTML- in das WML-Format oder umgekehrt umfaßt.

9. Verfahren nach einem der vorangehenden Ansprüche,
**dadurch gekennzeichnet, daß**
die Zusatzinformationen und/oder die einer Reduktion zugänglichen Teile der Nachricht Werbeinformationen, die insbesondere in eine nutzerbezogen erstellte und vor der Übermittlung der Nachricht präsentierte Portal Site eingebunden oder als Werbebanner eingeblendet werden oder Videobildfolgen oder Chatfenster zur Online-Kommunikation umfassen.

10. Verfahren nach einem der vorangehenden Ansprüche,
**dadurch gekennzeichnet, daß**
die Zusatzinformation Tarif- und/oder Info-Push-Informationen umfassen.

11. Verfahren nach einem der vorangehenden Ansprüche,
**dadurch gekennzeichnet, daß**
die Reduktion um vorbestimmte Teile die im wesentlichen vollständige Sperrung der Übermittlung einer gesamten Nachricht, insbesondere einer vollständigen IP-Netz-Seite, umfaßt.

12. Gateway (MG) zur Konvertierung des Formates einer Nachricht vor Übermittlung an ein Endgerät in einem Datenkommunikationsnetz (IPN), insbesondere IP-Netz, oder aus dem Datenkommunikationsnetz (IPN) in ein Telekommunikationsnetz (MN), insbesondere Mobilfunknetz, entsprechend mindestens einer vorgegebenen Konvertierungsregel,
**gekennzeichnet durch**
- erste Verbindungsmittel (CM1) zur Herstellung einer Verbindung mit einer Regeldatenbasis (RDB),
- Steuermittel (RC) zum Start und zur Abarbeitung einer Auswahlroutine zur Festlegung eines gültigen Konvertierungs- und Verarbeitungsregelsatzes aus einer in der Regeldatenbasis (RDB) gespeicherten Menge von Konvertierungs- und Verarbeitungsregeln zur Konvertierung des Nachrichtenformats und wahlweise zur Ergänzung um Zusatzinformationen und/oder Reduktion um vorbestimmte Teile,
- Umsetzermittel (TM) zur Bildung eines Konvertierungs-Steuersignales aus dem Konvertierungs- und Verarbeitungsregelsatz und
- erste Speichermittel (CSM) zur Speicherung des Konvertierungs- und Verarbeitungsregelsatzes oder des Konvertierungs-Steuersignals.

13. Gateway nach Anspruch 12,
**gekennzeichnet durch**
zweite Speichermittel (DM) zur Speicherung mindestens eines Auswahldatensatzes (SDM) zur Abarbeitung der Auswahlroutine (RC).

14. Gateway nach Anspruch 12 oder 13,
**gekennzeichnet durch**
zweite Verbindungsmittel (CM2) zur Verbindung mit einem, insbesondere externen, Zusatzinformationsspeicher (IM) und/oder einer Videosignalquelle und/oder einer Endgeräte-Kommunikationsstrecke.

## Claims

1. Method for transmitting a message to a terminal in a data communications network (IPN), in particular an IP network, or from the data communications network (IPN) to a telecommunications network (MN), in particular a mobile radio network, with the message format being converted in accordance with at least one predetermined conversion rule in a gateway (MG),
**characterized in that**,
before the start of the transmission, a connection is set up between the gateway (MG) and a rule database (RDB), a selection routine (RC) for defining a applicable conversion and processing rule set from a set of conversion and processing rules (which are stored in the rule database (RDB)) for conversion of the message format and, optionally, for adding supplementary information and/or reduction by predetermined parts is started, and
a conversion control signal is formed from the conversion and processing rule set,
with the conversion and processing rule set or the control signal being buffer-stored in the gateway (MG).

2. Method according to Claim 1,
**characterized in that**
the production of the connection to the rule database (RDB) and the start of the selection routine (RC) take place in the data communications network (IPN) when a session is being set up.

3. Method according to Claim 1 or 2,
**characterized in that**
sets of organized conversion and processing rules for concatenated execution of conversion and processing steps are stored in the rule database (RDB).

4. Method according to one of the preceding claims,
**characterized in that**
the selection routine (RC) is processed using a selection data record (SDM) which comprises:
- user data and/or
- the data communications network or telecommunications network address of the terminal and/or
- the identification of a dialling-in point or the geographical dialling-in location into the data communications network (IPN), or of the location of a terminal in the telecommunications network (MN) and/or
- the data communications network address of the message source and/or
- real-time data and/or
- the identification of one of a number of permissible carrier media or transmission paths to the terminal and/or
- other selection criteria, in particular predetermined by the operator of the gateway.

5. Method according to Claim 4,
**characterized in that**
the processing of the selection routine (RC) comprises calling up an individual user profile at least on the basis of user data and/or the data communications network or telecommunications network address of the terminal.

6. Method according to one of the preceding claims,
**characterized in that**
the conversion comprises translation into a different language or addition of supplementary information in a different language takes place.

7. Method according to one of the preceding claims,
**characterized in that**
the conversion comprises the conversion of an addressed IP address, in particular as a function of a relaying condition which is set on the terminal or on a server (AS), which is involved with the transmission process, in the data communications network (IPN).

8. Method according to one of the preceding claims,
**characterized in that**
the conversion comprises a conversion of the message or of a part of it from the HTML format to the WML format, or vice versa.

9. Method according to one of the preceding claims,
**characterized in that**
the supplementary information and/or the parts of the message which can be reduced comprise/comprises advertising information which, in particular, is included in a portal site produced on a user-related basis and presented before the transmission of the message, or which is overlaid as an advertising banner, or video picture sequences or chat windows for online communication.

10. Method according to one of the preceding claims,
**characterized in that**
the supplementary information comprises tariff and/or info-push information.

11. Method according to one of the preceding claims,
**characterized in that**
the reduction by predetermined parts comprises essentially completely inhibiting transmission of an entire message, in particular of a complete IP network site.

12. Gateway (MG) for conversion of the format of a message before transmission to a terminal in a data communications network (IPN), in particular an IP network, or from the data communications network (IPN) to a telecommunications network (MN), in particular a mobile radio network, in accordance with at least one predetermined conversion rule,
**characterized by**
- first connection means (CM1) for producing a connection to a rule database (RDB),
- control means (RC) for starting and for processing a selection routine for defining a applicable conversion and processing rule set from a set of conversion and processing rules (which are stored in the rule database (RDB)) for conversion of the message format and optionally for adding supplementary information and/or reduction by predetermined parts,
- converter means (TM) for forming a conversion control signal from the conversion and processing rule set, and
- first memory means (CSM) for storing the conversion and processing rule set or the conversion control signal.

13. Gateway according to Claim 12,
**characterized by**
second memory means (DM) for storing at least one selection data record (SDM) for processing the selection routine (RC).

14. Gateway according to Claim 12 or 13,
**characterized by**
second connection means (CM2) for connection to an, in particular external, supplementary information memory (IM) and/or to a video signal source and/or to a terminal communication path.

## Revendications

1. Procédé de transmission d'un message à un terminal dans un réseau de communication de données (IPN), en particulier un réseau IP, ou à partir du réseau de communication de données (IPN) vers un réseau de télécommunications (MN), en particulier un réseau radio mobile, moyennant la conversion du format du message selon au moins une règle de conversion prédéfinie dans une passerelle (MG),
**caractérisé en ce que**,
avant le début de la transmission, une liaison est établie entre la passerelle (MG) et une base de données de règles (RDB), une routine de sélection (RC) pour la détermination d'un jeu valable de règles de conversion et de traitement à partir d'un ensemble de règles de conversion et de traitement, mis en mémoire dans la base de données de règles (RDB), pour la conversion du format du message et, en option, pour compléter par ajout d'informations additionnelles et/ou pour réduire par suppression de parties prédéterminées, est lancée et un signal de commande de conversion est constitué à partir du jeu de règles de conversion et de traitement, le jeu de règles de conversion et de traitement ou le signal de commande étant mis en mémoire temporairement au niveau de la passerelle (MG).

2. Procédé selon la revendication 1,
**caractérisé en ce que**
l'établissement de la liaison vers la base de données de règles (RDB) et le lancement de la routine de sélection (RC) se font lors de l'établissement d'une session dans le réseau de communication de données (IPN).

3. Procédé selon la revendication 1 ou 2,
**caractérisé en ce que**,
dans la base de données de règles (RDB), des ensembles ordonnés de règles de conversion et de traitement pour l'exécution enchaînée d'étapes de conversion et de traitement sont mis en mémoire.

4. Procédé selon l'une des revendications précédentes,
**caractérisé en ce que**
la routine de sélection (RC) est exécutée à l'aide d'un jeu de données de sélection (SDM) qui comprend:
- des données utilisateurs et/ou
- l'adresse du réseau de communication de données ou du réseau de télécommunications du terminal et/ou
- l'identification d'un point de connexion ou de l'emplacement de connexion géographique dans le réseau de communication de données (IPN) ou de l'emplacement d'un terminal du réseau de télécommunications (MN) et/ou
- l'adresse du réseau de communication de données de la source du message et/ou
- des données en temps réel et/ou
- l'identification d'un de plusieurs supports resp. voies de transmission autorisés vers le terminal et/ou
- d'autres critères de sélection, en particulier prédéfinis par l'exploitant de la passerelle.

5. Procédé selon la revendication 4,
**caractérisé en ce que**
l'exécution de la routine de sélection (RC) comprend l'appel d'un profil d'utilisateur individuel au moins à l'aide de données utilisateurs et/ou de l'adresse du réseau de communication de données ou du réseau de télécommunications du terminal.

6. Procédé selon l'une des revendications précédentes,
**caractérisé en ce que**
la conversion comprend une traduction dans une autre langue ou il est procédé à une complétion par ajout d'une information supplémentaire dans une autre langue.

7. Procédé selon l'une des revendications précédentes,
**caractérisé en ce que**
la conversion comprend la conversion d'une adresse IP adressée, en particulier en fonction d'une condition de renvoi réglée dans le réseau de communication de données (IPN) au niveau du terminal ou d'un serveur (AS) impliqué dans la transmission.

8. Procédé selon l'une des revendications précédentes,
**caractérisé en ce que**
la conversion comprend une conversion du message ou d'une partie de celui-ci du format HTML dans le format WML ou inversement.

9. Procédé selon l'une des revendications précédentes,
**caractérisé en ce que**
les informations supplémentaires et/ou les parties du message accessibles à une réduction contiennent des informations publicitaires, qui sont intégrées en particulier dans un site portail (Portal Site) créé en rapport avec l'utilisateur et présenté avant la transmission du message ou apparaissent en tant que banderoles publicitaires, ou des suites d'images vidéo ou des fenêtres de chattage pour la communication en ligne.

10. Procédé selon l'une des revendications précédentes,
**caractérisé en ce que**
les informations supplémentaires contiennent des informations sur les tarifs et/ou «Info Push».

11. Procédé selon l'une des revendications précédentes,
**caractérisé en ce que**
la réduction par suppression de parties prédéterminées inclut le blocage sensiblement complet de la transmission d'un message complet, en particulier d'une page complète du réseau IP.

12. Passerelle (MG) pour la conversion du format d'un message avant la transmission à un terminal dans un réseau de communication de données (IPN), en particulier un réseau IP, ou à partir du réseau de communication de données (IPN) vers un réseau de télécommunications (MN), en particulier un réseau radio mobile, selon au moins une règle de conversion prédéfinie,
**caractérisée par**
- des premiers moyens de liaison (CM1) pour établir une liaison avec une base de données de règles (RDB),
- des moyens de commande (RC) pour le lancement et l'exécution d'une routine de sélection pour la détermination d'un jeu valable de règles de conversion et de traitement à partir d'un ensemble de règles de conversion et de traitement, mis en mémoire dans la base de données de règles (RDB), pour la conversion du format du message et, en option, pour la complétion par ajout d'informations supplémentaires et/ou pour la réduction par suppression de parties prédéterminées;
- des moyens convertisseurs (TM) pour constituer un signal de commande de conversion à partir du jeu de règles de conversion et de traitement et
- des premiers moyens d'enregistrement (CSM) pour la mise en mémoire du jeu de règles de conversion et de traitement ou du signal de commande de conversion.

13. Passerelle selon la revendication 12,
**caractérisée par**
des deuxièmes moyens de mémoire (DM) pour la mise en mémoire d'au moins un jeu de données de sélection (SDM) pour l'exécution de la routine de sélection (RC).

14. Passerelle selon la revendication 12 ou 13,
**caractérisée par**
des deuxièmes moyens de liaison (CM2) pour la liaison avec une mémoire d'informations supplémentaires (IM), en particulier externe, et/ou une source de signaux vidéo et/ou une distance de communication des terminaux.
